# EUROPEAN PATENT APPLICATION

(11) **EP 2 261 418 A1**
(43) Date of publication of application: **15.12.2010**
(21) Application number: 09161020.4
(22) Date of filing: 25.05.2009
(51) Int. Cl.: D06P 1/642, D06P 1/66, D06P 5/00, D06P 5/22, D06P 5/30, B41N 3/03, B41N 3/08, C23C 22/78

(54) **Pre-treatment liquid for liquid absorbing printing substrates**

(71) Applicant: Vistaprint Technologies Limited, Hamilton HM 12 (BM)
(72) Inventor: Hermann, Ulrich G., 8610 Uster (CH)
(74) Representative: Fleuchaus, Michael A.

(57) **Abstract**

The invention refers to liquids for the pre-treatment of liquid absorbing substrates, in particular textiles or garments, in printing processes, said liquids being based on water and/or a low molecular alcohol and including small amounts of an organic acid and/or other reagents to increase dye fixation as well as at least one corrosion inhibiting agent seleected from a group containing quaternary ammonium salts, derivates thereof and their corresponding organically substituted amines, hydroxy substituted acetylenic components and derivates thereof, carboxylic, dicarboxylic and polycarboxylic acids, long-chain carboxylic, dicarboxylic and polycarboxylic acids and separated fractions and derivates thereof, sulfur containing heterocyclic compounds and derivates thereof, nitrogen containing heterocyclic compounds and derivates thereof, nitrite and nitrate salts of metal ions, organic nitrites and nitrates, organic nitrogen compounds and reductive nitrogen containing compounds. Preferably the concentration of the corrosion inhibiting agent is between 0,01 wt.-% and 10 wt.-% and the surface tension of the liquid between 15 mN/m and 70 mN/m.

## Description

The present invention refers to pre-treatment liquids for liquid absorbing printing substrates. In particular, the present invention refers to pre-treatment liquids for use in direct-to-garment printing processes.

Applying liquid ink on liquid absorbing substrates is a well-known technique to print patterns, fonts or pictures with high definition on such substrates. Printable liquid absorbing substrates are, for example, paper, cardboard, woven or non-woven materials, lengths of material, textiles, garments and the like. A known printing process, which employs liquid ink is, for example ink jet printing. Ink jet printing is widely performed in two different ways: (1) by continuous ejection of pressurized ink through nozzles, or (2) by applying ink droplet-by-droplet only in places where such ink droplets are required to form a printed image. The latter is generally done using the so called drop-on-demand technique, where ink droplets are ejected from a print head at high speed, for example, using piezoelectric crystals that propel the ink droplets.

The problems when using ink jet printing techniques to print on absorbing materials such as textiles or garments, for example, by direct-to-garment printing, are diverse. For example, the applied inks often suffer in terms of colour fidelity, colour vividness and colour strength. Also, wash resistance of the printed image is often an issue. Moreover, in particular in high definition printing applications, bleeding is a major issue, that is, the intrusion of one ink spot into adjacent ink spots. In the large picture, this results in improper contrast and blurred representation of the printed image. Bleeding is affected by numerous factors, including the substrate's ink absorption and capillary action characteristics, the ink's properties, such as, for example, the drying speed as well as the printing technology and in particular the ink jet printer's nozzle arrangement that is being used for applying the ink.

To overcome these problems, various pre-treatment liquids based on different chemical compositions have been developed for use in direct-to-garment printing. Typically, pre-treatment liquids are based on water or a low molecular alcohol and include small amounts of an organic acid that serves to immobilize ink droplets and increase dye fixation. Other than that, pre-treatment liquids may contain sizing agents, anti-bleeding agents, pH controllers (buffers), moisturizers, surfactants and specific conditioners, such as, for example, anti-reducing agents.

The use of pre-treatment liquids prior to the application of liquid ink on absorbing substrates by ink jet printing in a wet-in-wet printing process improves print quality by immobilizing ink droplets on the substrate surface or at least close thereto and thereby avoiding bleeding, enhancing contrast, letting colours of the applied inks appear stronger and more brilliant, etc. In addition thereto garments treated by pre-treatment liquids in direct-to-garment printing techniques enjoy improved tensile strength, softer feel, improved or better controlled wash resistance, etc.

Known pre-treatment liquids are, however, corrosive due to the organic acids contained therein as well as ammonium salts and/or halide ions that are often present in such liquids. It has been found that known pre-treatment liquids lead to corrosion of non corrosion-resistant parts in print facilities and, in particular, in printing machines, by direct contact and notably also indirect contact with these liquids. This generally leads to increased service and maintenance costs and unwanted down times of the printing machines and other print facility equipment.

It is therefore an object of the invention to provide improved pre-treatment liquids that are less corrosive and possibly even protective against corrosion while, at the same time, maintaining the advantageous effects of known pre-treatment liquids on the print quality and the printing substrates.

To solve this object the invention provides a liquid for the pre-treatment of liquid absorbing substrates for use in printing processes, said liquid being based on water and/or a low molecular alcohol and including a small amount of an organic acid and/or other reagents to increase dye fixation, and wherein said liquid contains at least one corrosion inhibiting agent. Preferably, the corrosion inhibiting agent is soluble in protic solvents.

Organic acids used in pre-treatment liquids are, for example, monocarboxylic acids, such as, formic acid, acetic acid, propionic acid, and the like as well as aromatic acids, such as, benzoic acid and derivatives thereof, benzene sulfonic acid, p-toluene sulfonic acid and derivatives thereof. Different organic acids may also be used in pre-treatment liquids as long as they are sufficiently well soluble in water. Other reagents to increase dye fixation used in pre-treatment liquids are, for example, guanidine and its slats, alumina and silica powders as well as tartaric acid ammonium salts.

Also, pre-treatment liquids of the invention may contain hydrotropic agents, such as, for example, urea and thiourea, sizing agents, such as, for example, cellulose and derivatives thereof, alginate, xanthane gum, shellac gum, gum arabic and the like as well as conditioners, such as, for example, sodium chloride and sodium sulphate salts.

In a preferred embodiment of the invention, the corrosion inhibiting agent is selected from the group containing quaternary ammonium salts, derivates thereof and their corresponding organically substituted amines, hydroxy substituted acetylenic components and derivates thereof, carboxylic, dicarboxylic and polycarboxylic acids, long-chain carboxylic, dicarboxylic and polycarboxylic acids and separated fractions and derivates thereof, sulfur containing heterocyclic compounds and derivates thereof, nitrogen containing heterocyclic compounds and derivates thereof, nitrite and nitrate salts of metal ions, organic nitrites and nitrates, organic nitrogen compounds, reductive nitrogen containing compounds, combinations thereof and the like.

Other compounds, such as, for example, phosphonic acid esters, may be used as corrosion inhibiting agent as long as they are soluble in water or organic solvents and do not produce skin irritations or do other harm to the wearer.

In another preferred embodiment of the invention, the concentration of the corrosion inhibiting agent is between 0,01 wt.-% and 10 wt.-%, preferably between 0,05 wt.-% and 5 wt.-% and most preferably between 0,1 wt.-% and 1 wt.-%.

In yet another preferred embodiment of the invention, the surface tension of the pre-treatment liquid is between 15 mN/m and 70 mN/m, preferably between 17 mN/m and 50 mN/m, and most preferably between 20 mN/m and 40 mN/m. In order to adjust the surface tension of the pre-treatment liquid of the invention to the desired range, a surface-active agent may be added in an embodiment of the invention.

The liquids for the pre-treatment of liquid absorbing substrates for use in printing processes produce surprisingly good results as regards the avoidance of bleeding, contrast and colour enhancements, wash resistance, etc. It turned out that this can be attributed in parts to comparatively low concentrations of the corrosion inhibiting agents in the pre-treatment liquids of the invention, so that the ink droplet immobilizing effect and the dye fixation effect of the organic acid and/or said other reagents to increase dye fixation remain substantially unaffected. In addition, the corrosion inhibiting agents do, in contrast to what was expected by the inventors, only slightly affect the surface tension of the pre-treatment liquids of the invention, in particular if used at the low concentrations as mentioned, so that an effective and quick moistening of the liquid absorbing substrates and in particular textiles or garments can be achieved shortly before to the printing process.

Despite low concentrations of the corrosion inhibiting agents in the pre-treatment liquids of the invention, they show significantly reduced corrosive effects on printing machines and print facility installations. In particular, pitting corrosion of iron, steel, aluminium or magnesium containing parts is effectively lowered. Moreover, again contrary to what was expected, pre-treatment liquids of the invention did not produce any visibly marks, such as by discolouration, yellowing or browning on textiles or garments during drying and/or oven baking, a process in which printed textiles or garments are heated for curing and cross linking purposes after being printed on.

The invention also refers to the use of the liquid for the pre-treatment of liquid absorbing substrates in printing processes, preferably a wet-in-wet ink jet printing process in which liquid ink is printed directly on textiles or garments.

In accordance with a particularly preferred implementation of the invention, the liquid for the pre-treatment of the liquid absorbing substrate of the invention is used as a priming fluid, that is, the liquid is applied to the liquid absorbing substrate directly before the printing process. Preferably, the application of the pre-treatment liquid of the invention includes spraying or rolling of the pre-treatment liquid on the liquid absorbing substrate inside the printing machine, that is, the ink jet printer. Alternatively or in addition thereto, the pre-treatment liquid can be applied to the liquid absorbing substrate outside the printing machine prior to being processed therewith.

In such an implementation of the invention, the application of the pretreatment liquid inside the printing machine can be achieved in different ways. In one embodiment, for example, the entire print substrate is moistened as the spray nozzle for spraying pre-treatment liquid onto the liquid absorbing substrate is arranged independently of the print head in the feeding area of the printing machine. In such case, the amount of pre-treatment liquid can be varied, for example, as different types of textiles or garments are printed by altering the feeding speed of the printing machine while having pre-treatment liquid fed to the spray nozzles at constant rates.

In another embodiment, the spray nozzle is coupled to the print head and thus pre-treatment liquid is applied to the absorbing substrate mainly in areas, where also ink is going to be applied. This way a reduced consumption of pre-treatment liquid can be achieved and the amount of pre-treatment liquid can be varied either by modifying the spray nozzle ejection rate or by changing the relative speed of the print/spray head with regard to the printing substrate.

Further features of the present invention will become apparent when considering the following detailed description of experimental results with different pre-treatment-liquids according to the invention in test systems.

### Experimental Data

In order to work out optimized anti-corrosion and dye fixation/ink droplet immobilization effects, a broad variety of corrosion inhibitors were tested by the inventor in admixtures with experimental pre-treatment liquids as may be used in direct-to-garment printing processes.

Most experimental pre-treatment liquids were aqueous solutions including 3 wt.-% to 10 wt.-% (preferably 5 wt.-%) acetic acid and 0.1 to 5 wt.-% of low-molecular glycols or glycol ethers (e. g. ethylene glycol or propyl glycol or ethylene glycol monopropyl ether) slightly neutralized with small amounts (0.1 wt.-% to 3 wt.-%, preferably 1 wt.-% to 2 wt.-%) of organic amines, such as triethylamine, ethanolamine or higher homologues with longer alkylic chains but still water-soluble. The surface tension was in the range of 20 to 40 mN/m. Other experimental pre-treatment liquids were alcoholic solutions.

The corrosion inhibiting agents tested in admixture with the experimental pre-treatment liquids were of the following types:
Acetylenic alcohols (e.g. Korantin PP™, BASF), dicarboxylic acids (e.g. Irgacor DSS G™, Ciba), polyvalent acids, for example, polyacrylic acid (e.g. Mw: 1000; Sigma-Aldrich), quarternary ammonium compounds (e.g. Lugalvan P™ and Lugalvan BPC48™, BASF) and organically soluble heterocyclic compounds, for example, imidazoline (e.g. Amin OT™,Ciba), sarcosine (e.g. Sarkosyl O™,Ciba) or triazole (e.g. Irgamet 42™, Ciba) derivatives.

For an improved mixing of the corrosion inhibiting agents in the experimental pre-treatment liquids and subsequent spraying thereof through nozzles, a relatively low viscosity of less than 500 mPas and preferably less than 200 mPas at 25°C of the corrosion inhibiting agents, or their respective solutions, is desirable and can be accomplished by suitably mixing with water or isopropyl alcohol at percentages between 0.01 wt.-% to 25 wt.-%, and preferably 0.1 wt.-% to 3 wt-%, that is, addition of 0.01 1 wt.-% to 25 wt.-% and preferably 0.1 wt.-% to 3 wt-% of the corrosion inhibiting agent to solvent water or alcohol, such as, for example isopropyl alcohol or mixtures thereof.

In order to test corrosion inhibiting efficiency, non-plated and untreated test bodies of non-corrosion resistant steel were immersed in modified pre-treatment liquids. Corrosion of the test bodies was evaluated on a daily basis.

Corrosions tests yielded the results given in table 1.

**Table 1**

| Corrosion inhibitor: | Concentr. (wt.-%) | Corrosion after day 1 | Remarkable corrosion (no. of days); specify |
|---|---|---|---|
| 1. none | 0 | strong | 1, weight loss by corrosion |
| 2. Korantin PP, BASF | 0.1 to 1 | none | 28, very faint, no weight loss |
| 3. Lugalvan P, BASF | 0.1 to 1 | none | 21, very faint, no weight loss |
| 4. Lugalvan BPC48, BASF | 0.1 to 1 | none | 21 very faint, no weight loss |
| 5. Irgacor DSS G, Ciba | 0.1 | minimum | 14 very faint, no weight loss |
| 6. Polyacrylic Acid (Sigma-Aldrich); 30% solution in water | 1 to 2 | minimum | 7 very faint, no weight loss |
| 7. Irgamet 42, Ciba | 0.1 to 1 | none | 28, non-aqueous solution |
| 8. Amin O, Ciba | 0.1 to 1 | none | 28, non-aqueous solution |
| 9. Sarkosyl O, Ciba | 0.1 to 1 | none | 28, non-aqueous solution |

Test bodies immersed in aqueous experimental pre-treatment liquid without a corrosion inhibiting agent (No. 1 showed strong corrosion already after one day). Test bodies immersed in non-aqueous solutions but alcoholic solutions (Nos. 7 to 9) showed no remarkable corrosion for a long time.

Following corrosion test, print tests were done with an ink jet direct-to-garment printer in combination with suitable water based inks in cyan, magenta, yellow, black and white colour. Test prints were done on dark and white T-shirts and the T-shirts oven baked after printing at about 170°C for about 8 minutes.

Dark T-shirts were printed using aqueous pre-treatment solutions according to the invention and white T-shirts were printed using alcoholic pre-treatment solutions according to the invention.

Printing with normal print parameters produced print results that were absolutely comparable to direct-to-garment printing processes using pre-treatment liquids according to the prior art. No bleeding, no unsharp print result and no discoloration, such as yellowing or brow discoloration were visible after printing and oven baking. Wash tests revealed no deterioration of the print result after five consecutive wash cycles.

## Claims

1. Liquid for the pre-treatment of liquid absorbing substrates, in particular textiles or garments, in printing processes, said liquid being based on water and/or a low molecular alcohol and including small amounts of an organic acid and/or other reagents to increase dye fixation,
**characterized in that**
said liquid contains at least one corrosion inhibiting agent.

2. Liquid according to claim 1, wherein the corrosion inhibiting agent is selected from a group containing quaternary ammonium salts, derivates thereof and their corresponding organically substituted amines, hydroxy substituted acetylenic components and derivates thereof, carboxylic, dicarboxylic and polycarboxylic acids, long-chain carboxylic, dicarboxylic and polycarboxylic acids and separated fractions and derivates thereof, sulfur containing heterocyclic compounds and derivates thereof, nitrogen containing heterocyclic compounds and derivates thereof, nitrite and nitrate salts of metal ions, organic nitrites and nitrates, organic nitrogen compounds, reductive nitrogen containing compounds, combinations and solutions thereof and the like.

3. Liquid according to claim 2, wherein the corrosion inhibiting agent is soluble in protic solvents.

4. Liquid according to claim 3, wherein the viscosity of the corrosion inhibiting agent or its solution is adjusted to be lower than 1500 mPas at 25°C, preferably lower than 1000 mPas at 25°C, more preferably lower than 500 mPas at 25°C and most more preferably lower than 200 mPas at 25°C by by mixing with water or alcohol at percentages of 0.01 wt.-% to 25 wt.-%, and preferably 0.1 wt.-% to 3 wt-%.

5. Liquid according to any of claims 1 to 4, wherein the concentration of the corrosion inhibiting agent or its solution is between 0,01 wt.-% and 10 wt.-%, preferably between 0,05 wt.-% and 5 wt.-%, and more preferably between 0,1 wt.-% and 1 wt.-%.

6. Liquid according to any of claims 1 to 5, wherein the surface tension of the liquid is between 15 mN/m and 70 mN/m, preferably between 17 mN/m and 50 mN/m, and more preferably between 20 mN/m and 40 mN/m.

7. Liquid according to claim 6, wherein the surface tension of the liquid is adjusted by addition of at least one surface-active agent.

8. Use of a liquid according to any of claims1 to 7 in a printing process.

9. Use according to claim 7, wherein the printing process is a wet-in-wet ink jet printing process.

10. Use according to claim 8 or 9, wherein the printing process is a direct-to-garment printing process.

11. Use according to any of claims 8 to 10, wherein the liquid is used as a priming fluid.

12. Use according to any of claims 8 to 11, wherein the liquid is applied to the printing substrate directly before the printing and preferably applied by spraying or rolling of the liquid onto the printing.

13. Use according to any of claims 8 to 12, wherein the application of the liquid to the printing substrate is done inside the printing machine.
